# EUROPEAN PATENT APPLICATION

(11) **EP 4 664 820 A1**
(43) Date of publication of application: **17.12.2025**
(21) Application number: 24757197.9
(22) Date of filing: 14.02.2024
(51) Int. Cl.: H04L 9/32, H04W 4/46, H04L 9/06

(54) **METHOD AND VEHICLE TERMINAL FOR V2V-BASED COLLABORATIVE DATA VERIFICATION**

(30) Priority: 14.02.2023 KR 20230019671; 13.02.2024 KR 20240020291
(71) Applicant: Hyundai Motor Company, Seoul 06797 (KR); Kia Corporation, Seoul 06797 (KR)
(72) Inventor: JUNG, Chang Hun, Hwaseong-si Gyeonggi-do 18280 (KR); PARK, Seung Wook, Yongin-si Gyeonggi-do 16847 (KR); HAN, Gene Back, Hwaseong-si Gyeonggi-do 18280 (KR)
(74) Representative: Isarpatent
(86) International application number: PCT/KR2024/002060
(87) International publication number: WO 2024/172473

(57) **Abstract**

Provided are a vehicle terminal for V2V-based collaborative data verification and a method performed by the same. The method comprises: receiving service data from a service providing server; generating a first hash value for the service data; requesting hash segments corresponding to the service data from surrounding vehicles; receiving the hash segments from the surrounding vehicles, wherein portions of a second hash value corresponding to the received hash segmetns are at least partially different; and verifying integrity of the service data based on the received hash segments and the first hash value. Each of the hash segments is a portion of the second hash value generated by a corresponding surrounding vehicle for the service data that has already been received from the service providing server, and may be combined by the vehicle terminal in order to reconstruct the second hash value.

## Description

### [Technical Field]

The present disclosure relates to verifying the integrity of data received by a vehicle through a communication network. More specifically, the present disclosure relates to verifying the integrity of data received by a vehicle through a communication network in cooperation with surrounding vehicles.

### [Background]

Recently, attempts have been made to provide various services through network communication in vehicles. Such connectivity may be implemented using a Vehicle to Everything (V2X) communication technology.

Advanced functions of vehicles and services for users corresponding to the advanced functions are deeply related to software (SW) developed in conjunction with the hardware (HW) of the vehicle. In order to fix bugs in such software or to enhance functions, Over The Air (OTA) software (SW) updates are expanding for reasons of convenience and economy.

When SW updates are performed through a communication network, the vehicle is exposed to network security threats such as tampering and spoofing. For example, an attacker may infect an OTA server and deliver software (or firmware) containing malicious code to the vehicle, update it with software containing malicious code, and as a result, perform various cybersecurity attacks through the malicious software. In addition, without infecting the OTA server, an attacker can use a man-in-the-middle attack to replace the software update files being transmitted with malicious files, thereby causing malicious firmware update files to be delivered to the vehicle.

In addition, an autonomous traveling system or driver assistance system of the vehicle may use high-precision map data for a traveling area or a planned traveling area provided by an external server. Forgery/modification of the high-precision map data may threaten the safe traveling of the vehicle.

Therefore, integrity verification of data such as SW updates and high-precision maps received through the communication network is required. The integrity verification is well known in the computer/cryptography field, and in a typical application, the integrity verification ensures that a transmitted message is received without being maliciously damaged by errors caused by the communication channel or by hackers.

### [Disclosure]

### [Technical Problem]

The present disclosure proposes a method for performing integrity verification of server data received by a vehicle through a communication network in cooperation with surrounding vehicles, and a vehicle terminal for the same.

### [Summary]

In accordance with some embodiments of the present disclosure, a method performed by a vehicle terminal for V2V-based collaborative data verification, is provided. The method comprises: receiving service data from a service providing server; generating a first hash value for the service data; requesting hash segments corresponding to the service data from surrounding vehicles; receiving the hash segments from the surrounding vehicles; and verifying integrity of the service data based on the received hash segments and the first hash value. Each of the hash segments is combinable to reconstruct a second hash value generated by a corresponding surrounding vehicle for the service data that has already been received from the service providing server.

In some embodiments, the verifying of the integrity of the service data may include comparing the first hash value with each of the received hash segments. In some embodiments, the verifying of the integrity of the service data may include reconstructing the second hash value by combining the received hash segments, and comparing the first hash value with the reconstructed second hash value. In some embodiments, the verifying of the integrity of the service data may include determining that the integrity verification of the service data has failed when a ratio of the number of surrounding vehicles that have succeeded in receiving the hash segments to the total number (N) of the hash segments is less than a preset threshold.

In some embodiments, the requesting of the hash segments may include transmitting, to each of the surrounding vehicles, a request message including a total number (N) of hash segments to be divided from the second hash value and a sequence number assigned to the corresponding surrounding vehicle.

In some embodiments, each of the hash segments received from the surrounding vehicles may be an Mth hash segment corresponding to the sequence number (M) assigned to the corresponding surrounding vehicle of the hash segments obtained by dividing the second hash value according to the total number (N) of the hash segments.

In some other embodiments, each of the hash segments received from the surrounding vehicles may be an Mth hash segment and an M+1th hash segment corresponding to the sequence number (M) assigned to the corresponding surrounding vehicle of the hash segments obtained by dividing the second hash value according to the total number (N) of the hash segments. The method may further comprise: determining whether a pair of hash segments, received from a pair of surrounding vehicles and corresponding to the same portion of the second hash value, match each other; and determining that the service data is abnormal data when the pair of hash segments corresponding to the same portion of the second hash value do not match each other.

The total number (N) of the hash segments may be included in metadata received together with the service data from the server, or may be a preset value in the vehicle terminal. The total number (N) of the hash segments may be determined based on the number of surrounding vehicles capable of responding.

Metadata may be received together with the service data from the service providing server. The metadata may include version information of the service data and an identifier of a hash function commonly used to generate the first hash value and the second hash value. The metadata may be used to identify the surrounding vehicles capable of responding.

In some other embodiments, a vehicle terminal for V2V-based collaborative data verification is provided. The vehicle terminal comprises: a memory; and at least one processor. The processor is configured to perform receiving service data from a service providing server; generating a first hash value for the service data; requesting hash segments corresponding to the service data from surrounding vehicles; receiving the hash segments from the surrounding vehicles; and verifying integrity of the service data based on the received hash segments and the first hash value.

### [Advantageous Effects]

According to the present disclosure, a vehicle can perform the integrity verification of data received through a communication network in cooperation with surrounding vehicles. For example, the vehicle can verify the integrity of OTA SW updates and precision map data received through network communication.

Integrity verification is performed based on a comparison of hash values generated for the same data that the vehicles received at different times and/or at different geographical locations, and when the hash values generated by multiple vehicles for the same data match each other, the data may be considered not to have been compromised by an attacker. On the other hand, when at least one of the hash values does not match, the data received by at least one of the vehicles may be considered to have been compromised by an attacker.

### [Brief Description of the Drawings]

FIG. 1 is a conceptual diagram illustrating a vehicle environment in which the technologies of the present disclosure may be used.
FIG. 2 is a flowchart illustrating a method for a vehicle to perform V2V-based collaborative data verification on service data according to an embodiment of the present disclosure.
FIG. 3 illustrates two hash segments to be transmitted by surrounding vehicles according to assigned sequence numbers when the total number (N) of hash segments is equal to 10.
FIG. 4 is a conceptual diagram illustrating a method for a hash function of a Merkle-Damgard configuration to generate a hash value.
FIG. 5 illustrates a simplified functional block diagram of an exemplary vehicle terminal that may be used to implement a method according to the present disclosure.

### [Detailed Description]

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

In exemplary embodiments of the present disclosure, a vehicle may be referred to as a concept based on a concept including various means of transportation having network communication functions. In some cases, a vehicle may be interpreted as a concept based on a concept including various land transportations such as a car, motorcycle, truck, and bus that travel on a road, as well as various transportation means such as a vertical take-off and landing aircraft (VTOL aircraft) for urban air mobility, a drone, or the like.

The technologies of the present disclosure relate to a method for V2V-based collaborative data verification and a vehicle terminal using the same. The vehicle receives data through network communication with a service providing server, and performs integrity verification of the received data (which may be damaged) in cooperation with surrounding vehicles.

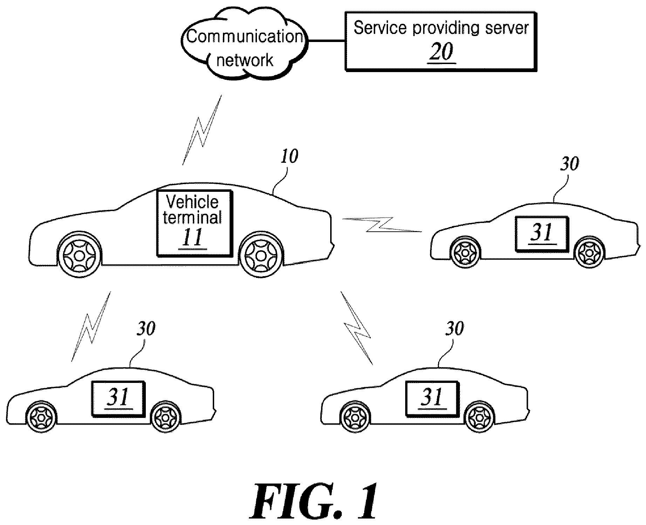

FIG. 1 is a conceptual diagram illustrating a vehicle environment in which the technologies of the present disclosure may be used.

Each of the vehicles 10 and 30 is equipped with vehicle terminals 11 and 31 that support a data communication function. The vehicle terminals 11 and 31 are connected to a communication network and may request service data from a service providing server 20 and receive service data from the service providing server 20.

The vehicle terminals 11 and 31 may support V2V communication. For example, the vehicle terminal 11 of the vehicle 10 may perform V2V communication with the vehicle terminals 31 of the surrounding vehicles 30 to verify the integrity of service data (provided from the service providing server 20, but which may have been damaged) received from the communication network.

The service providing server 20 is a server that provides service data to the vehicles 10 and 30. For example, the service providing server 20 may be a server that supports Over The Air (OTA) update files of software or firmware used in each of the electronic control units of the vehicles. As another example, the service providing server 20 may be a server that provides various types of data such as high-precision map data, weather information, and an intrusion detection system (IDS) rule set used for the functions of such software or firmware.

The vehicle terminal 11 of the vehicle 10 may receive the service data from the service providing server 20 and generate a first hash value for the received service data. The vehicle terminal 11 may request hash segments corresponding to the service data from the vehicle terminals 31 of the surrounding vehicles 30 and receive hash segments from the vehicle terminals 31 of the surrounding vehicles 30. Each of the hash segments is a portion of a second hash value generated for the service data that the corresponding surrounding vehicle 30 has already received from the service providing server. Parts of the second hash value corresponding to the hash segments received from the vehicle terminals 31 of the surrounding vehicles 30 may be different. For example, the hash segment received from the first surrounding vehicle and the hash segment received from the second surrounding vehicle may be different parts of the hash value. Therefore, the hash segments received from the surrounding vehicles 30 can be combined to completely or partially reconstruct the second hash value.

The vehicle terminal 11 of the vehicle 10 may verify the integrity of the service data based on the received hash segments and the first hash value. The vehicle terminal 11 may compare the first hash value with each of the received hash segments to verify the integrity of the data. The vehicle terminal 11 may combine the received hash segments to reconstruct a second hash value and compare the first hash value with the reconstructed second hash value to verify the integrity of the data.

The collaborative data verification between these vehicles is based on the assumption that cyber security attacks by an attacker are generally performed at specific times and/or geographical locations, and that vehicles may probabilistically receive the same service data at different times and/or geographical locations. For example, even when service data received by a vehicle from a communication network is compromised by an attacker, service data received by several surrounding vehicles at different times and/or at different geographical locations may not have been affected by the attack by the attacker.

Therefore, when the hash values for the same service data generated by each of the vehicles located within the geographical range where V2V communication is possible match each other, it may be considered that the service data has not been compromised by the attacker. On the other hand, when at least one of the hash values does not match, the service data received by at least one of the vehicles may be considered to have been compromised by the attacker.

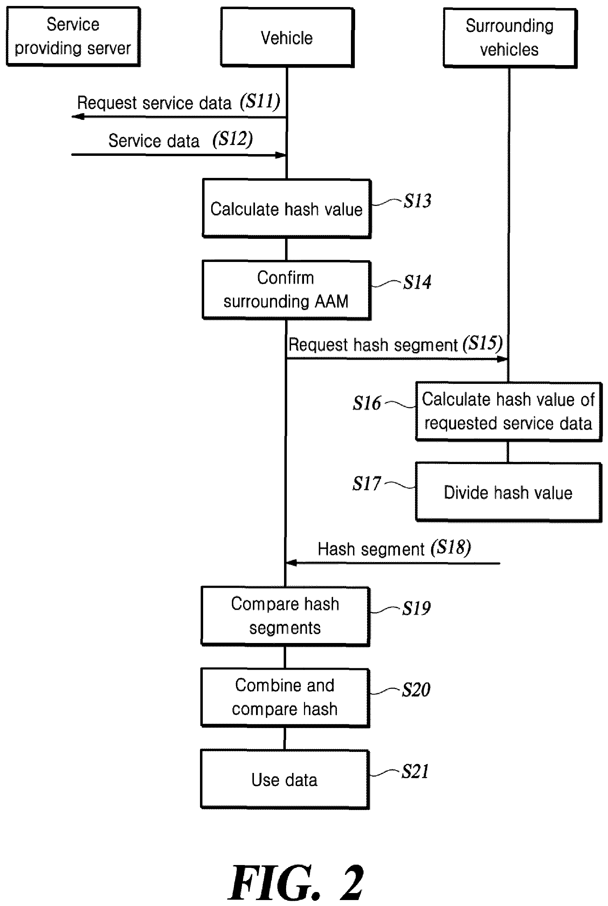

FIG. 2 is a flowchart illustrating a method for the vehicle (specifically, the vehicle terminal) to perform the V2V-based collaborative data verification on the service data according to an embodiment of the present disclosure. In the following description, the vehicle terminal may simply be referred to as a "vehicle".

The vehicle 10 may request the service data from the service providing server 20 (S11). The vehicle 10 may request updates of software or firmware that operate in conjunction with hardware (HW) in the vehicle, and various types of data used for functions of such software or firmware, from the service providing server 20. For example, the vehicle 10 may receive a notification from the service providing server 20 that a new version of software (or firmware) for an electronic control module mounted in the vehicle 10 has been released, and when the vehicle 10 enters a state suitable for performing a software update (for example, a parked state or a driver's approval of an update), the vehicle 10 may request the software update file from the service providing server 20. As another example, when the vehicle 10 enters a new traveling area used in an autonomous traveling system, the vehicle 10 may request precise map data for the new traveling area or the planned traveling area from the service providing server 20.

The service providing server 20 may transmit service data requested by the vehicle 10 to the vehicle 10 (S12). The service providing server 20 may transmit metadata defining and describing the service data together with the service data to the vehicle 10. For example, the metadata may include identification information of the service data, version information of the service data, an identifier of a hash function to be used to generate the hash value of the service data, or the like. Examples of the hash function include MD5, SHA-1, or SHA-2.

The vehicle 10 may receive data (that is, service data and metadata) from the service providing server 20. The vehicle 10 may calculate a hash value H for the received service data (S13). The hash function used to generate the hash value may be predefined in the control logic of the vehicle terminal or determined based on the identifier of the hash function defined in metadata received from the service providing server 20.

The vehicle 10 may identify the surrounding vehicles that can respond to the request of the hash segments (S14). For example, the vehicle 10 may select vehicles of the surrounding vehicles that have the same service data as the service data whose integrity is to be verified. To this end, the vehicle 10 may provide metadata related to the service data to the surrounding vehicles in order to inquire whether the surrounding vehicles can respond to the request of the hash segments.

Each of the surrounding vehicles can determine whether the surrounding vehicle can respond to the request of the hash segments based on the received metadata and reply to the vehicle 10 with the result. For example, the surrounding vehicles may determine whether they have the same service data based on the identification information of the service data and the version information of the service data, and may determine whether the hash function corresponding to the identifier of the hash function is available. In some embodiments, the vehicle 10 may also verify whether the surrounding vehicles are safe in terms of cyber security.

The vehicle 10 determines the total number (N) of hash segments based on the number of surrounding vehicles capable of responding, and may assign a different sequence number (M) from 1 to N to each surrounding vehicle. For example, when 10 surrounding vehicles are found that can respond to the request for the hash segments, a different sequence number (M) from 1 to 10 is assigned to each surrounding vehicle.

In another embodiment, the total number (N) of hash segments may be included in metadata received together with service data from a service server, or may be preset in the control logic of the vehicle terminal. In such a case, the vehicle 10 may repeat the process of S14 until the number of selected surrounding vehicles reaches the preset total number (N) of hash segments.

In order to verify the integrity of the received service data, the vehicle 10 may request at least one hash segment corresponding to the service data to be verified from each surrounding vehicle (S15). For example, the vehicle 10 may transmit a request message including the total number (N) of hash segments and the sequence number (M) assigned to the corresponding surrounding vehicle to each of the surrounding vehicles. The request message may further include metadata about the service data.

The surrounding vehicles that have received the request for the hash segment from the vehicle 10 calculate a hash value H' for the service data that the surrounding vehicles have already received from the service providing server 20 (S16). The hash functions used to calculate the hash value H and the hash value H' are the same. The hash function used to calculate the hash value H' may be predefined in the control logic of the vehicle terminal of the surrounding vehicle, or may be determined based on a hash function identifier included in the metadata received from the vehicle 10. Alternatively, the nonvolatile memory of the vehicle terminal 31 may hold the hash value H' pre-calculated for the service data. In such a case, S16 may be omitted.

After calculating the hash value H' (or reading the hash value H' stored in the nonvolatile memory), the vehicle terminal 31 of each of the surrounding vehicles may divide the hash value H' into N hash segments based on the total number (N) of hash segments (S17). In addition, each of the surrounding vehicles may transmit one or more hash segments determined according to its assigned sequence number among the N divided hash segments to the vehicle 10 (S18).

For example, the surrounding vehicle may divide the hash value H' according to the total number (N) of hash segments and transmit the Mth hash segment corresponding to the assigned sequence number (M) among the obtained hash segments to the vehicle 10.

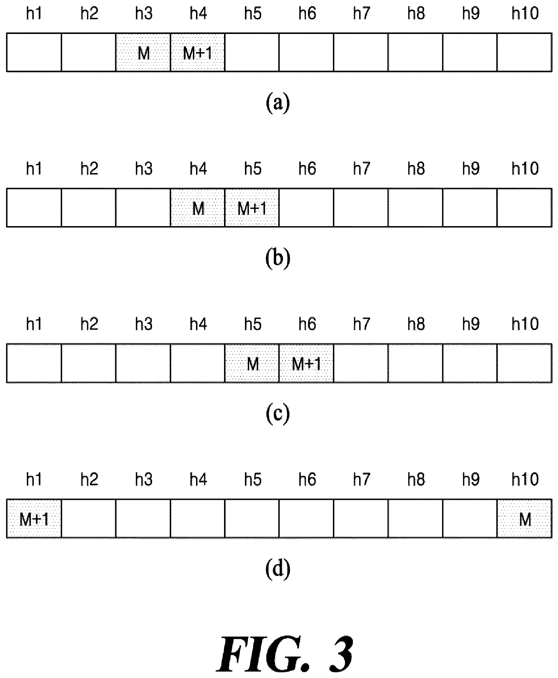

As another example, as illustrated in FIG. 3, the surrounding vehicle may transmit the Mth hash segment and the M+1th hash segment corresponding to the assigned sequence number (M) among the hash segments obtained by dividing the hash value H' according to the total number (N) of hash segments to the vehicle 10.

FIG. 3 illustrates two hash segments to be transmitted by surrounding vehicles according to assigned sequence numbers when the total number (N) of hash segments is equal to 10.

The hash value (H') is divided into N (=10) hash segments (h1, h2, ... h10) of the same length. When the hash value (H') is not a multiple of N, the last hash segment may be shorter in length than the other hash segments. In one implementation, the last hash segment may include predefined padding bits (for example, "1") to have the same length.

As illustrated in (a) of FIG. 3, a surrounding vehicle that is assigned the same sequence number as 3 may transmit the third hash segment (h3) and the fourth hash segment (h4) to the vehicle 10. As illustrated in (b) of FIG. 3, a surrounding vehicle that is assigned the same sequence number as 4 may transmit the fourth hash segment (h4) and the fifth hash segment (h5) to the vehicle 10. As illustrated in (c) of FIG. 3, a surrounding vehicle that is assigned the same sequence number as 5 may transmit the fifth segment (h5) and the sixth segment (h6) to the vehicle 10. As illustrated in (d) of FIG. 3, a surrounding vehicle that is assigned the same sequence number as 10 may transmit the tenth segment (h10) and the first segment (h1) to the vehicle 10.

In this way, for a given portion of the hash value (H'), two hash segments are obtained from two surrounding vehicles. For example, one of the pair of hash segments received from the first surrounding vehicle, which is assigned the same sequence number as 4, may be identical to the hash segment received from the second surrounding vehicle, which is assigned the same sequence number as 3, and the other may be identical to the hash segment received from the third surrounding vehicle, which is assigned the same sequence number as 5.

The vehicle 10 may determine whether the pair of hash segments, received from two different surrounding vehicles and corresponding to the same portion of the hash value (H'), match each other (S19). For example, the vehicle 10 may compare the k+1th hash segment received from the surrounding vehicle, which is assigned the same sequence number as k, with the k+1th hash segment received from the surrounding vehicle, which is assigned the same sequence number as k+1. This process is repeated N times. When a pair of hash segments do not match even once in N repetitions, the vehicle 10 may determine that the received service data is abnormal data. Alternatively or complementarily, when a pair of hash segments do not match even once in N repetitions, the vehicle 10 may perform the procedure again from S11.

In some embodiments, S19 may be skipped. The vehicle 10 may perform or skip S19 depending on the type of service data. For example, S19 may be skipped for weather information and high-precision map data for which processing speed is relatively important. On the other hand, S19 may be necessarily performed for software update files for which integrity verification is important.

In each of the N repetitions, when the pair of hash segments matches, the vehicle 10 reconstructs a hash value (H") by combining the hash segments. The hash segments received from the N vehicles are combined based on the sequence numbers, with duplicate segments removed. The vehicle 10 compares the reconstructed hash value (H") with the hash value (H) generated by the vehicle 10 (S20).

When the reconstructed hash value (H") and the generated hash value (H) match, the vehicle 10 may determine that the service data received from the service providing server 20 is safe. Therefore, the vehicle 10 uses the service data according to its original purpose. For example, when the service data is a software update file, the vehicle 10 may use the service data to update the software of the related electronic control module, and when the service data is high-precision map data, the service data may be transmitted to the autonomous traveling control system. When the service data is weather information or multimedia, the service data may be transmitted to an In-Vehicle Infotainment. The service data or the generated hash value (H), or both, may be stored in the nonvolatile memory of the vehicle terminal 11 so that they can be used for collaborative data verification with other vehicles in the future.

When the reconstructed hash value (H") and the generated hash value (H) do not match, the vehicle 10 may determine that the service data received from the service providing server 20 is not safe. In such a case, the vehicle 10 may request the service providing server 20 for the service data again. Alternatively, when the comparison results in S19 or S20 do not match, a warning may be sent to the service providing server 20 or an alarm may be provided to the user through the user interface.

Meanwhile, a situation may occur in which some surrounding vehicles cannot transmit their hash segments to the vehicle 10 due to poor communication conditions. In such a case, the vehicle 10 may repeat the procedure from S15 again. Alternatively, the vehicle 10 may compare only the hash segments that have been successfully received with the corresponding portions of the hash value (H). In addition, the vehicle 10 may determine that the integrity verification of the service data has failed when the ratio of the number of surrounding vehicles that have successfully received the hash segments to the total number (N) of hash segments is less than a preset threshold.

In one embodiment, the service providing server 20 or the vehicle 10 may set the total number (N) of hash segments or the preset threshold differently depending on the type of service data provided (for example, SW update file, precision map, multimedia) or the type of vehicle 10 being serviced (for example, shuttle, cargo, emergency, or the like). For example, the total number of hash segments or the preset threshold may be larger for SW update files than for multimedia.

In one embodiment, the service providing server 20 or the vehicle 10 may set the total number of hash segments or the preset threshold differently depending on the communication situation or the traffic situation. For example, when the communication situation is poor or the road condition is quiet, the total number of hash segments or the preset threshold may be smaller than when it is not.

In the above embodiments, the hash segment is described as a part of the hash value generated for the service data. That is, the hash segments are obtained by dividing the hash value generated for the service data. As with most advanced cryptographic techniques, these hash functions are computationally intensive and, therefore, slow or require significant computing power. Given the limited computing power of the vehicle terminal or in cases where rapid integrity verification is required, such as for high-precision map data, it may be inefficient for each surrounding vehicle to compute a full hash value in order to transmit the hash segment.

In this context, in an alternative embodiment, each of the hash segments may be an intermediate value of each stage of the hash function (or hash algorithm) that generates the hash value for the service data.

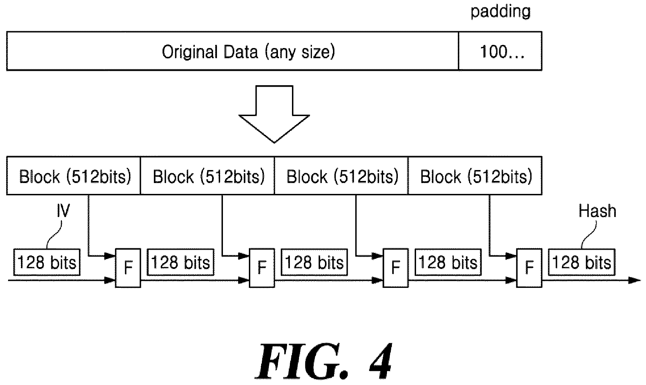

FIG. 4 is a conceptual diagram illustrating a method for a hash function of a Merkle-Damgard configuration to generate a hash value. This scheme has been used in the design of many widely used hash functions, such as MD5, SHA-1, and SHA-2. As illustrated in FIG. 4, the hash function divides the target data (binary data) into blocks (or chunks) of fixed length, processes the blocks one by one for each stage (or round), and combines the output of the previous stage (that is, intermediate result) with the input block of the current stage using a compression function. In the example of FIG. 4, the algorithm consists of four stages. The compression function, indicated by "F", converts two fixed-length inputs into an output of the same length as one of the inputs. The first stage of the hash function algorithm starts with an initialization vector (IV), which is an initial value, and although it may vary depending on the algorithm or implementation, the initialization vector is generally a fixed value. The last block may have the same size as other blocks through padding as needed. The fixed length of the block (512 bits in the example of FIG. 4) and the length of the output of the compression function (128 bits in the example of FIG. 4) may vary depending on the hash function.

The output of the last stage can be a hash value of the target data, or alternatively, the output of the last stage may be converted into a hash value of the target data using a finalization function to strengthen the hash or obtain a smaller length of bits.

Here, the output of each stage may be used as a hash segment to be transmitted to the vehicle 100 in response to the hash segment request by the surrounding vehicles. For example, when the hash algorithm for calculating the hash value H' is composed of four stages, the vehicle 10 may receive outputs of different stages from the four surrounding vehicles. Since the target data is divided into fixed-length blocks processed at each stage, the total number (N) of hash segments required for collaborative data verification may depend on the size of the target data.

In this alternative embodiment, the surrounding vehicle may transmit the output of one stage or the outputs of two (continuous or intermittent) stages corresponding to its assigned sequence number as hash segments to the vehicle 10 in S16 to S18 of FIG. 2. In S19, the vehicle 10 may check whether a pair of hash segments corresponding to the output of the same stage, which are the hash segments received from two different surrounding vehicles, match each other. In S20, the vehicle 10 may reconstruct the hash value H' for the service data by using the hash segments received from the surrounding vehicles as one of the two inputs of the compression function of each stage.

In this embodiment, each surrounding vehicle does not need to calculate the complete hash value in order to transmit the hash segment to the vehicle 10. It only needs to calculate the output(s) of the stage corresponding to the sequence number assigned to each surrounding vehicle.

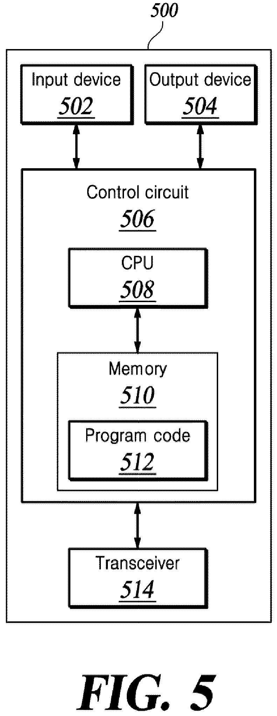

FIG. 5 illustrates a simplified functional block diagram of an exemplary vehicle terminal that may be used to implement the method according to the present disclosure.

A vehicle terminal 500 may be the vehicle terminals 11 and 31 mounted on each of the vehicles 10 and 30 illustrated in FIG. 1. As illustrated in the example of FIG. 5, the vehicle terminal 500 may include an input device 502, an output device 504, a control circuit 506, a central processing unit (CPU) 508, a memory 510, a program code 512, and a transceiver 514. The control circuit 506 executes the program code 512 in the memory 510 through the CPU 508, and controls the operation of the vehicle terminal 500 accordingly. The control circuit 506 may interact with a user or exchange signals with other electronic control units/systems within the vehicle via the input device 502 and the output device 504. The transceiver 514 is used to receive and transmit wireless signals, transmitting received signals to the control circuit 506 and wirelessly outputting signals generated by the control circuit 506.

The operational processes of the present disclosure can be implemented as computer-readable code on a computer-readable recording medium. The computer-readable recording medium may include all types of storage devices on which computer-readable data can be stored. The computer-readable recording medium may be a non-transitory medium such as a read-only memory (ROM), a random access memory (RAM), a compact disc ROM (CD-ROM), magnetic tape, a floppy disk, or an optical data storage device. Furthermore, the computer-readable recording medium may be distributed over computer systems connected through a network, and computer-readable program code can be stored and executed in a distributive manner.

Further, the components of the present disclosure may utilize integrated circuit structures such as memory, processors, logic circuits, look-up tables, and the like. These integrated circuit structures perform each of the functions described herein under the control of one or more microprocessors or other control devices. Further, the components of the present disclosure may be specifically implemented by portions of a program or code that includes one or more executable instructions for performing a particular logic function and is executed by one or more microprocessors or other control devices. Further, the components of the present disclosure may include or be implemented by a central processing unit (CPU), microprocessor, or the like that performs the respective functions. Further, the components of the present disclosure may store instructions executed by one or more processors in one or more memories.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

### CROSS-REFERENCE TO RELATED APPLICATION

This application claims priority to Patent Application No. 10-2023-0019671, filed on February 14, 2023 in Korea, and Patent Application No. 10-2024-0020291, filed on February 13, 2024 in Korea, the entire contents of which are incorporated herein by reference.

## Claims

1. A method performed by a vehicle terminal for V2V-based collaborative data verification, the method comprising:
receiving service data from a service providing server;
generating a first hash value for the service data;
requesting hash segments corresponding to the service data from surrounding vehicles, each of the hash segments being combinable to reconstruct a second hash value generated by a corresponding surrounding vehicle for the service data that has already been received from the service providing server;
receiving the hash segments from the surrounding vehicles; and
verifying integrity of the service data based on the received hash segments and the first hash value.

2. The method of claim 1, wherein the requesting of the hash segments includes transmitting, to each of the surrounding vehicles, a request message including a total number (N) of hash segments to be divided from the second hash value and a sequence number assigned to the corresponding surrounding vehicle.

3. The method of claim 2, wherein each of the hash segments received from the surrounding vehicles is an Mth hash segment corresponding to the sequence number (M) assigned to the corresponding surrounding vehicle of the hash segments obtained by dividing the second hash value according to the total number (N) of the hash segments.

4. The method of claim 2, wherein each of the hash segments received from the surrounding vehicles is an Mth hash segment and an M+1th hash segment corresponding to the sequence number (M) assigned to the corresponding surrounding vehicle of the hash segments obtained by dividing the second hash value according to the total number (N) of the hash segments.

5. The method of claim 4, further comprising:
determining whether a pair of hash segments, received from a pair of surrounding vehicles and corresponding to the same portion of the second hash value, match each other; and
determining that the service data is abnormal data when the pair of hash segments corresponding to the same portion of the second hash value do not match each other.

6. The method of claim 2, wherein the total number (N) of the hash segments is included in metadata received together with the service data from the server.

7. The method of claim 2, wherein the total number (N) of the hash segments is a preset value in the vehicle terminal.

8. The method of claim 2, wherein the requesting of the hash segments further includes:
identifying surrounding vehicles capable of responding to the request for the hash segments; and
determining the total number (N) of the hash segments based on the number of surrounding vehicles capable of responding.

9. The method of claim 8, wherein the metadata received from the server together with the service data includes version information of the service data and an identifier of a hash function commonly used to generate the first hash value and the second hash value, and
the metadata is used to identify the surrounding vehicles capable of responding.

10. The method of claim 2, wherein the verifying of the integrity of the service data includes determining that the integrity verification of the service data has failed when a ratio of the number of surrounding vehicles that have succeeded in receiving the hash segments to the total number (N) of the hash segments is less than a preset threshold.

11. The method of claim 2, wherein the verifying of the integrity of the service data includes comparing the first hash value with each of the received hash segments.

12. The method of claim 2, wherein the verifying of the integrity of the service data includes reconstructing the second hash value by combining the received hash segments, and
comparing the first hash value with the reconstructed second hash value.

13. A vehicle terminal for V2V-based collaborative data verification, the vehicle terminal comprising:
a memory; and
at least one processor,
wherein the processor is configured to perform
receiving service data from a service providing server;
generating a first hash value for the service data;
requesting hash segments corresponding to the service data from surrounding vehicles, each of the hash segments being combinable to reconstruct a second hash value generated by a corresponding surrounding vehicle for the service data that has already been received from the service providing server;
receiving the hash segments from the surrounding vehicles; and
verifying integrity of the service data based on the received hash segments and the first hash value.

14. The vehicle terminal of claim 13, wherein the processor is configured to perform, as a portion of the verifying the integrity of the service data, comparing the first hash value with each of the received hash segments.

15. The vehicle terminal of claim 13, wherein the processor is configured to perform, as a portion of the verifying of the integrity of the service data, combining the received hash segments to reconstruct the second hash value, and comparing the first hash value with the reconstructed second hash value.
